# EUROPÄISCHE PATENTSCHRIFT

(11) **EP 1 584 545 B1**
(45) Veröffentlichungstag und Bekanntmachung des Hinweises auf die Patenterteilung: **23.06.2010**
(21) Anmeldenummer: 05005688.6
(22) Anmeldetag: 16.03.2005
(51) Int. Cl.: B62D 33/06

(54) **Aufhängung für eine Fahrerkabine eines Nutzfahrzeuges und Verfahren zu deren Steuerung**
Suspension for a driver cab of a utility vehicle and command process thereof
Suspension pour une cabine de véhicule utilitaire et procédé de commande de cette dernière

(30) Priorität: 06.04.2004 DE 102004016910
(43) Veröffentlichungstag der Anmeldung: 12.10.2005
(60) Teilanmeldung: 06008970.3
(73) Patentinhaber: MAN Nutzfahrzeuge Aktiengesellschaft, 80995 München (DE)
(72) Erfinder: Gerritzen, Ralph, Dipl.-Ing. (FH), 82110 Germering (DE); Mendler, Hardy, Dipl.-Ing., 85221 Dachau (DE); Nickels, Thomas, Dipl.-Ing. (TU), 81541 München (DE)

(56) Entgegenhaltungen:
- EP-A- 0 692 183
- EP-A- 0 994 009
- DE-A1- 10 232 909
- US-A- 4 991 673
- US-A- 5 337 847
- US-A- 5 368 119

## Beschreibung

Die vorliegende Erfindung betrifft eine Aufhängung für eine Fahrerkabine eines Nutzfahrzeuges sowie ein Verfahren zur Steuerung einer derartigen Aufhängung.

Moderne Nutzfahrzeuge in sog. Frontlenkerbauweise weisen eine über Federn und/oder Dämpfer mit einem Fahrzeugrahmen verbundene Fahrerkabine auf, die oberhalb einer Vorderachse eines Zugfahrzeuges bzw. Nutzfahrzeuges angeordnet ist. Diese gefederte und/oder gedämpfte Aufhängung ist aufgrund von teilweise erheblichen vertikalen Beschleunigungen, die auf die Fahrerkabine einwirken, nahezu unverzichtbar. Sobald sich das Nutzfahrzeug im Stillstand befindet, kann sich diese Federung jedoch als Nachteil erweisen, da die Fahrerkabine bei Windeinflüssen, beispielsweise durch nahe vorbei fahrende Fahrzeuge ins Schwanken geraten kann. Bei einem im Fahrerhaus schlafenden Fahrer oder Passagier kann dies zu mehr oder weniger starken Beeinträchtigungen seiner Ruhephasen führen. Weiterhin kann bei einem an einer Steigung bzw. auf einer zur Seite geneigten Fahrbahn abgestellten Fahrzeug die hieraus resultierende Neigung der Fahrerkabine zu Komforteinbußen für den ruhenden Fahrer führen.

Die DE 41 36 572 A1 beschreibt ein Fahrzeug mit einer Nivelliereinrichtung, mit deren Hilfe das Fahrzeug im Stillstand horizontal ausgerichtet werden kann. Die horizontale Ausrichtung des Fahrzeugrahmens und damit des gesamten Fahrzeuges erfolgt über verstellbare hydraulische Federbeine, welche den Achsaufhängungen des Fahrzeugs zugeordnet sind.

Die JP 071 49 256 A beschreibt ein Luftfederungssystem für ein Fahrzeug, bei dem mittels eines mechanisch wirkenden Neigungssensors eine horizontale Ausrichtung einer Fahrerkabine eingestellt werden kann.

Aus der gattungsgemäßen EP 0 994 A1 ist eine landwirtschaftliche Zugmaschine mit einer hydraulisch gedämpft aufgehängten Fahrerkabine bekannt, bei der die Relativbewegungen der Kabine gegenüber einem Fahrzeugrahmen erfasst werden. Mittels Neigungssensoren werden zudem die Bewegungen gegenüber einer Horizontalen erfasst. Eine Steuereinheit sorgt für eine Ansteuerung der Aufhängungselemente mit dem Ziel, die Fahrerkabine in Bezug auf eine Referenzorientierung auszurichten.

Die landwirtschaftliche Zugmaschine hat fest an einem Fahrgestellrahmen angeordnete Hinterräder und an einer starren Vorderachse angeordnete Vorderräder. Die Vorderachse kann Pendelbewegungen um eine Längsachse der Zugmaschine ausführen. An der Vorderachse kann eine Federung vorgesehen sein.

Die Gattungsgemässe EP 0 994 009 A1 offenbart somit eine Aufhängung für eine Fahrerkabine eines Nutzfahrzeugs, mit wenigstens drei fluidisch wirkenden Tragelementen, die zwischen der Fahrerkabine und einem Fahrgestellrahmen angeordnet und die mittels einer Steuerschaltung jeweils separat in ihrem Hub bzw. in ihrer Feder und/oder Dämpfungscharakteristik einstellbar sind, wobei eine annähernd horizontale Ausrichtung der Fahrerkabine *(auch)* im Stillstand des Nutzfahrzeugs durch eine Einstellung des jeweiligen Hubs wenigstens eines der wenigstens drei Tragelemente realisiert ist, und wobei eine Steuerung zur Lagejustierung der Fahrerkabine um eine Fahrzeuglängsachse mittels einer Verstellung der Tragelemente vorgesehen ist.

Durch DE 102 32 909 A1 ist eine Aufhängung für eine Fahrerkabine eines Nutzfahrzeugs mit sechs fluidisch wirkenden Tragelementen bekannt, die zwischen der Fahrerkabine und einem Fahrgestellrahmen angeordnet und die mittels einer Steuerschaltung jeweils separat in ihrem Hub bzw. in ihrer Feder- und/oder Dämpfungscharakteristik einstellbar sind. Eine annähernd horizontale Ausrichtung der Fahrerkabine während der Fahrt des Nutzfahrzeugs wird durch eine Einstellung des jeweiligen Hubs wenigstens fünf der sechs Tragelemente verwirklicht.

Durch den in DE 102 32 909 A1 zitierten Stand der Technik ist ferner eine Landmaschine bekannt, bei der fluidisch wirkende Tragelemente zwischen der Fahrerkabine und dem Fahrgestellrahmen angeordnet sind. Kippwinkelsensorsignale werden verwendet, um die Tragelemente so zu steuern, dass die Fahrerkabine bei geneigtem Gelände horizontal ausgerichtet bleibt. Elastische Aufnahmen zwischen Fahrerkabine und Tragelementen dienen der Vibrationsdämpfung. Die elastischen Aufnahmen und die Tragelemente verfügen über konstante Feder- und/oder Dämpfungscharakteristiken.

Durch EP 0 692 183 A1 ist eine Aufhängung für ein Fahrgestellrahmen eines Trauben- oder Beerenvollemters bekannt. Mittels fluidisch wirkender Aufhängungselemente des Fahrwerks kann der Fahrgestellrahmen beispielsweise beim Bergabfahren im Weinberg horizontal ausgerichtet werden.

Ein Ziel der Erfindung besteht darin, einen optimalen Ruhekomfort für Personen, beispielsweise eines Fahrers des Nutzfahrzeugs, zu erhalten, weiche die Fahrerkabine als Ruheraum etwa während gesetzlich vorgeschriebener Ruhe- oder Übernachtungspausen nutzen.

Dieses Ziel wird mit dem Gegenstand des unabhängigen Anspruchs 1 bzw. mit einem Verfahren gemäß Anspruch 12 erreicht. Bei der erfindungsgemäßen Aufhängung für eine Fahrerkabine eines Nutzfahrzeuges mit den Merkmalen des Anspruchs 1 ist vorgesehen, dass eine annähernd horizontale Lage der Fahrerkabine im Stillstand des Nutzfahrzeuges durch eine Einstellung des jeweiligen Hubs von Tragelementen und/oder von Aufhängungselemente eines Fahrwerks des Nutzfahrzeuges realisierbar ist. Als Tragelemente können insbesondere mit hydraulischem und/oder pneumatischem Druck beaufschlagbare Tragbälge bzw. Federbälge zum Einsatz kommen, die zwischen der Fahrerkabine und dem Fahrgestellrahmen angeordnet sind.

Unter einem Tragelement wird im vorliegenden Zusammenhang ein Bauteil verstanden, das eine Luftfeder, bspw. einen Federbalg, sowie ein Dämpferelement, bspw. einen hydraulisch wirkenden Stoßdämpfer, umfasst. Ggf. kann das Tragelement darüber hinaus einen Wegsensor zur Erfassung einer aktuellen Auslenkung des Tragelements aufweisen.

Bei einer pneumatisch wirkenden Aufhängung mit Federbälgen können beispielsweise durch manuelle Steuerung seitens des Fahrers einzelne dieser Federbälge mit einem erhöhten Druck beaufschlagt werden, während aus anderen Federbälgen die darin gespeicherte Druckluft abgelassen wird. Hierdurch kann auf einfache Weise eine horizontale Ausrichtung der Fahrerkabine hergestellt werden. Gleiches funktioniert auch mit einem hydraulisch wirkenden System, bei dem die Fahrerkabine über hydraulische wirkende Feder- und/oder Dämpferelemente mit dem Fahrzeugrahmen verbunden ist.

Mittels der erfindungsgemäßen Aufhängung kann der Fahrer das Fahrerhaus während des Stillstandes des Fahrzeugs in eine horizontale Lage bringen. Das Fahrerhaus kann bei diesem sog. Schlafmodus unabhängig von der Bodenneigung waagrecht eingestellt werden. Auf diese Weise kann gewährleistet werden, dass der Fahrer bei den gesetzlich vorgeschriebenen Ruhepausen ein Höchstmaß an Komfort genießen kann. Bei einer ersten Variante der Aufhängungssteuerung kann der Fahrer einzelne Tragelemente manuell in ihrem Hub einstellen, bis die Kabine horizontal ausgerichtet ist. Dies kann insbesondere manuell erfolgen. Ein Neigungs- oder Lagesensor ist hierbei nicht zwingend notwendig, da der Fahrer die Fahrzeugneigung selbst beurteilen und die Ausrichtung der Fahrerkabine entsprechend seiner eigenen Wahrnehmung vornehmen kann.

Neben einer manuellen Steuerung des Hubs der Tragelemente und/oder der Aufhängungselemente des Fahrwerks kann auch eine automatische Steuerung vorgesehen sein, die beispielsweise die Signale eines Lage- bzw. Neigungssensors auswertet und daraus eine Druckbeaufschlagung der einzelnen Trag- oder Aufhängungselemente herleitet.

Gemäß der vorliegenden Erfindung ist vorgesehen, dass eine Ausrichtung der einen Ruheraum für Ruhe- oder Übernachtungspausen wenigstens eines Fahrers umfassenden Fahrerkabine um eine Längsachse des Nutzfahrzeuges ausschließlich über eine unterschiedliche Druckbeaufschlagung der Tragelemente erfolgt, während eine Ausrichtung um eine Querachse des Fahrzeugs mittels einer Absenkung oder Anhebung des Chassis gegen die Hinterachse des Fahrzeugs erfolgt. Die Ausrichtung um die Längsachse erfolgt hierbei mittels linker bzw. rechter Tragelemente, während die Ausrichtung um die Querachse mittels einer Höhenverstellung der Aufhängungselemente der Fahrzeughinterachse erfolgt. Diese Ausrichtung um die Fahrzeugquerachse kann in vorteilhafter Weise mittels eines bereits vorhandenen ECAS-Systems (ECAS, Electronically Controlled Air Suspension) erfolgen, bei dem die Fahrzeughinterachse mittels pneumatisch wirkender Tragbälge gegen den Rahmen abgestützt ist.

Weiterhin ist vorgesehen, dass die Tragelemente nach einer erfolgten Lagejustierung in ihrer Dämpfungscharakteristik dahingehend einstellbar sind, dass eine Bewegung der Fahrerkabine weitgehend oder vollständig unterdrückbar ist. Dies kann insbesondere durch eine geeignete Dämpferhartstellung erreicht werden, bei der eine maximale Dämpferverhärtung angestrebt wird. Hierdurch kann beispielsweise eine durch Wind hervorgerufene Schwankbewegung der Fahrerkabine weitgehend unterdrückt werden. Gleichermaßen können hierdurch Schwankbewegungen unterdrückt werden, die durch Windkräfte vorbei fahrender Fahrzeuge wie LKWs o. dgl. verursacht werden. Zusätzlich können Bewegungen der Fahrerkabine, ausgelöst durch Bewegungen oder Gewichtsverlagerungen von Personen in der Kabine, unterdrückt werden. Es kann ggf. auch vorgesehen sein, dass die Fahrerkabine mechanisch verriegelbar ist. Zusätzlich kann das Fahrwerk gegen einen mechanischen Anschlag (sog. Pufferanschlag bzw. Achsanschlag) gefahren werden.

Neben einer Höhenregullerung des Chassis an der Hinterachse kann optional auch eine zusätzliche Höhenregulierung an der Vorderachse vorgesehen sein, vorzugsweise mittels eines ebenfalls bereits vorhandenen ECAS-Systems an der Vorderachse.

Eine weitere Ausgestaltung der Erfindung sieht vor, dass eine automatische Ausregelung von Schwankbewegungen mittels einer variablen Ansteuerung der Tragelemente der Fahrerkabine erfolgen kann. Das Fahrzeugchassis kann zur Erreichung einer Wankstabilisierung mittels des ECAS-Systems auf den Achsanschlag (Vorder- und/oder Hinterachse) abgesenkt werden. Der Regelvorgang der Wankstabilisierung kann dadurch erfolgen, dass die Tragbälge be- oder entlüftet und im eingestellten Zustand gehalten werden, so dass die Fahrerkabine horizontal ausgerichtet ist. Anschließend werden die Dämpfungselemente auf ihre härteste Stufe eingestellt bzw. blockiert. Hierdurch können Windeinflüsse oder auch Schaukeln aufgrund von Lastverteilungen in der Kabine vermindert bzw. vermieden werden. Als einstellbare Dämpfer können bspw. sog. CDC-Dämpfer (CDC, Continuous Damping Control) eingesetzt werden, die in ihrer Dämpfungscharakteristik in weiten Grenzen variierbar sind.

Die Sensierung der Lage und/oder der Bewegungen der Fahrerkabine kann wahlweise mittels eines, der Fahrerkabine zugeordneten bzw. dort angeordneten Lagesensors und/oder mittels Wegsensoren erfolgen, die den jeweiligen Tragelementen zugeordnet bzw. dort integriert sind. Als solche Wegsensoren kommen insbesondere induktive Sensoren oder Ultraschallsensoren in Frage, die innerhalb der Luftbälge angeordnet sein können. Wahlweise oder zusätzlich kann ein induktiv arbeitender Wegsensor an einer geeigneten Stelle am Chassis angeordnet sein.

Die weiteren bevorzugten Ausgestaltungen des erfindungsgemäßen Verfahrens verwenden die bereits erwähnten unterschiedlichen Merkmale, so dass sie hier nicht nochmals erwähnt werden müssen.

Die Erfindung wird nachfolgend anhand eines bevorzugten Ausfühmngsbelspiels unter Bezugnahme auf die beiliegenden Zeichnungen näher erläutert. Dabei zeigt:
- Figur 1: eine schematische Darstellung eines Nutzfahrzeuges in Frontlenkerbauweise, das eine über einer Vorderachse angeordnete Fahrerkabine aufweist,
- Figur 2: eine schematische Perspektivdarstellung eines Teils eines Rahmengestells des Nutzfahrzeuges inklusive der dazugehörigen Fahrerhauslegerung, jedoch ohne Fahrerhausbodenblech,
- Figur 3: ein schematisches Blockschaltbild einer ersten Variante einer erfindungsgemäßen Aufhängungssteuerung für die Fahrerkabine,
- Figur 4: ein schematisches Blockschaltbild einer zweiten Variante der Aufhängungssteuerung,
- Figur 5: ein schematisches Blockschaltbild einer dritten Variante der Aufhängungssteuerung und
- Figur 6: ein schematisches Blockschaltbild einer vierten Variante der Aufhängungssteuerung.

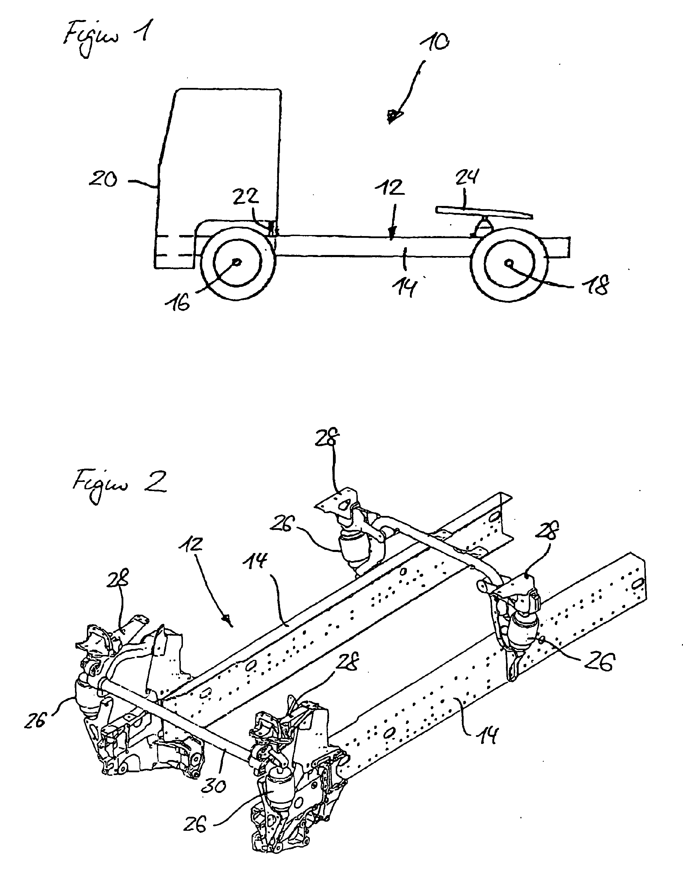

Die schematische Darstellung der Figur 1 zeigt eine Sattelzugmaschine in sog. Frontlenkerbauweise, die im Folgenden allgemein als Nutzfahrzeug 10 bezeichnet wird. Die Erfindung beschränkt sich jedoch keineswegs auf sog. Frontlenkerfahrzeuge, sondern lässt sich in gleicher Weise an sog. Haubenfahrzeugen realisieren, bei denen die Fahrerkabine hinter einem Antriebsmotor angeordnet ist. Das Nutzfahrzeug 10 kann selbstverständlich auch einen anderen Aufbau aufweisen als den gezeigten. So kann es bspw. Tandemachsen vorne und/oder hinten oder hintere Drillingsachsen aufweisen. Die erfindungsgemäße Aufhängung kann in vorteilhafter Weise bei allen denkbaren Nutzfahrzeug- und Sonderfahrzeugvarianten eingesetzt werden.

Das Nutzfahrzeug 10 weist einen Fahrgestellrahmen 12 (sog. Chassis) auf, der üblicherweise mindestens zwei miteinander verstrebte Längsträger 14 umfasst. Am Fahrgestellrahmen 12 sind jeweils Aufhängungselemente (nicht dargestellt) für eine Vorderachse 16 sowie für eine Hinterachse 18 verankert. Eine Fahrerkabine 20 ist über mehrere Tragelemente 22 gefedert und/oder gedämpft mit dem Fahrgestellrahmen 12 verbunden. Wenn im vorliegenden Zusammenhang von Tragelementen 22 die Rede ist, so ist damit grundsätzlich ein Luftfeder-Dämpfungsmodul gemeint, bei dem Luftfedern und hydraulische bzw. pneumatische Dämpfungselemente in kombinierter Bauweise zusammengefasst sind. Zusätzlich können die Tragelemente noch mit geeigneten integrierten Wegsensoren versehen sein, die bspw. eine Auslenkung der Tragelemente 22 mittels Ultraschallsignalauswertung erfassen und daraus ein Sensorsignal bilden können. Die Wegsensoren können bspw. auch eine induktive Wegerfassung vorsehen.

Typisch für die Frontlenkerbauweise ist, dass die Fahrerkabine 20 über der Vorderachse 16 angeordnet ist. Das in Figur 1 dargestellte Nutzfahrzeug 10 ist als Zugfahrzeug ausgestaltet. Hierbei ist im Bereich der Hinterachse 18 ein Kupplungselement 24 für einen Aufliegeanhänger (nicht dargestellt) angeordnet.

Bei einem Stillstand des Nutzfahrzeuges 10 kann die Fahrerkabine 20 als Ruheraum für einen Fahrer genutzt werden, wenn dieser beispielsweise Ruhe- oder Übernachtungspausen einlegt. Hierbei kann es vorkommen, dass das Nutzfahrzeug 10 auf geneigtem oder unebenem Untergrund steht, so dass die Fahrerkabine 20 nicht horizontal ausgerichtet ist. Dies kann zu Komforteinbußen für den ruhenden Fahrer führen.

Ein weiteres Problem hinsichtlich eines optimalen Ruhekomforts kann dadurch entstehen, dass die gefedert und/oder gedämpft abgestützte Fahrerkabine 20 bei Windböen und/oder bei Windeinflüssen durch vorbeifahrende Fahrzeuge o. dgl. ins Schwanken geraten kann. Derartige Schwankungen können auch durch Bewegungen der Kabinenpassagiere ausgelöst werden. Aus diesem Grund sieht die vorliegende Erfindung vor, dass die Fahrerkabine 20 im Stillstand des Fahrzeugs 10 horizontal ausgerichtet und/oder stärker gedämpft (Dämpfer auf härteste Stufe gestellt) werden kann, beispielsweise durch eine manuelle Ansteuerung der Tragelemente 22, die im gezeigten Ausführungsbeispiel jeweils pneumatisch wirkende Federbälge 26 aufweisen, wie dies anhand der schematischen Darstellung der Figur 2 verdeutlicht ist.

Die schematische Darstellung der Figur 2 zeigt die Anordnung der Tragelemente 22, die hier als vier Federbälge bzw. Tragbälge 26 an den beiden Längsträgern 14 des Fahrgestellrahmens 12 dargestellt sind, an deren oberem Ende jeweils ein Verankerungsteil 28 angeordnet ist. Die Fahrerkabine 20 ist an ihrer Unterseite mit den Verankerungsteilen 28 der Tragbälge 26 verbunden, so dass eine gleichmäßige Abstützung der Fahrerkabine 20 am Fahrgestellrahmen 12 ermöglicht ist. Die vier Federbälge 26 ermöglichen durch individuelle Ansteuerung bzw. Druckbeaufschlagung eine horizontale Ausrichtung der Fahrerkabine 20 unabhängig von einer ggf. geneigten Ausrichtung des Fahrzeugrahmens 12. Gelenkverbindungen zwischen den Tragbälgen 26 und den Verankerungsteilen 28 sind an der Vorderseite der Fahrerkabine durch einen Stabilisator 30 verbunden. Auf diese Weise ist die jeweilige Neigung der Fahrerkabine 20 gegenüber dem Fahrgestellrahmen 12 exakt definiert.

Eine einfache Ausgestaltung der Erfindung kann vorsehen, dass die Fahrerkabine 20 in Fahrzeuglängsachse über die linken und die rechten Federbälge 26 und in Fahrzeugquerachse über eine Anhebung oder Absenkung des Chassis an der Hinterachse 18 in eine horizontale Lage gebracht werden kann. Zur Höhenverstellung der Hinterachse 18 eignet sich bspw. ein Luftfedersystem mit Federbälgen, ein sog. ECAS-System, bei dem die Federhöhe der Federbälge an der Hinterachse 18 variabel einstellbar ist.

In ähnlicher Weise können die Tragelemente 22 zur Schwingungsregelung der Fahrerkabine 20 eingesetzt werden. Derartige Nickschwingungen entstehen insbesondere beim stärkeren Beschleunigen und Verzögern des Fahrzeugs 10. Auch Wank- oder Rollbewegungen um die Fahrzeuglängsachse können durch eine gezielte Ansteuerung der einzelnen Dämpfungselemente der jeweiligen Tragbälge 22 zumindest teilweise unterdrückt werden. Ein hoher Kabinenschwerpunkt begünstigt derartige Relativbewegungen zwischen Fahrzeugrahmen und Fahrerkabine zusätzlich.

Nicht dargestellt sind in Figur 1 und 2 die Stoßdämpferelemente, die normalerweise den einzelnen Tragelementen zugeordnet sind und die jeweils für eine Schwingungsdämpfung der Fahrerkabine 20 sorgen. Wahlweise können diese Stoßdämpfer in ihrer Dämpfungscharakteristik verstellbar sein. Insbesondere während des Stillstandes des Fahrzeugs ist eine möglichst "harte" Dämpfungscharakteristik wünschenswert, um die Bewegungen der in horizontale Lage gebrachten Kabine möglichst stark zu dämpfen. Derartige Dämpferelemente sind als sog. CDC-Dämpfer bekannt.

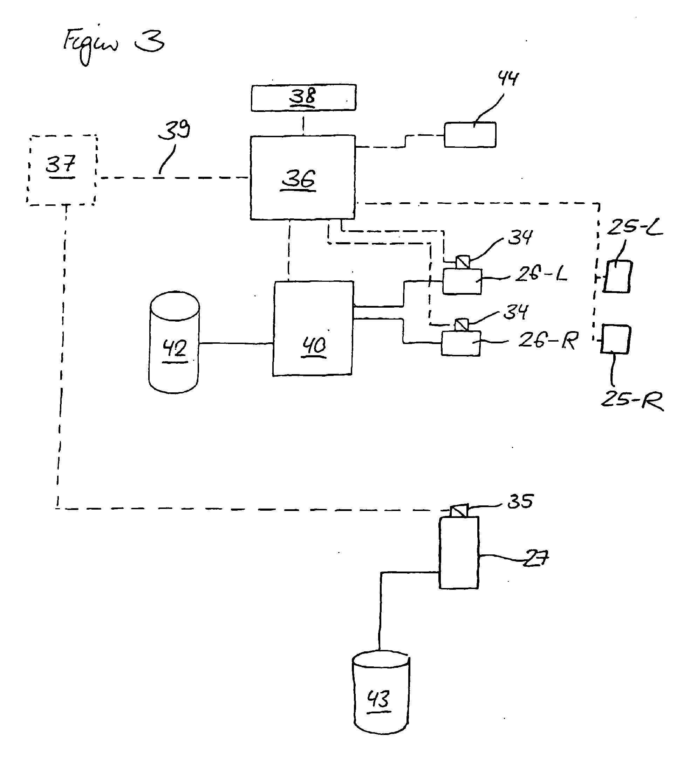

Die Figuren 3 bis 6 verdeutlichen in schematischen Blockschaltbildern verschiedene Varianten zur Steuerung einer Höhennivellierung bzw. zur Schwingungsdämpfung der Fahrerkabine 20.

Die Figur 3 verdeutlicht eine erste Variante einer Steuerschaltung zur horizontalen Ausrichtung der Fahrerkabine 20. Bei dieser einfachsten Variante werden die linken Tragbälge 26-L sowie die rechten Tragbälge 26-R zur Winkelausrichtung der Fahrerkabine 20 um die Fahrzeuglängsachse angesteuert. Die Winkelausrichtung der Fahrerkabine 20 um die Fahrzeugquerachse erfolgt mittels einer Druckbeaufschlagung von Tragelementen 27 eines an der Hinterachse 18 angeordneten ECAS-Systems. Jeder der Tragbälge 26-L und 26-R weist eine separate Steuereinheit 34 auf, mit der jeweils die Druckbeaufschlagung gesteuert wird. Die Steuereinheiten 34 der Tragbälge 26 sind über elektrische Steuerleitungen (unterbrochene Linien) mit einer zentralen Steuerschaltung 36 gekoppelt, die mit einer Eingabeeinrichtung 38 verbunden ist. Als Steuereinheiten 34 eignen sich bspw. bekannte Magnetventile, bei denen hydraulische oder pneumatische Ventile mittels einer elektromagnetischen Ansteuerung geschaltet werden.

Mittels der Eingabeeinrichtung 38 kann der Fahrer die gewünschten Steuerbefehle an die zentrale Steuerschaltung 36 übermitteln. Die zentrale Steuerschaltung 36 steuert weiterhin einen Ventilblock 40 an, der bspw. eine Reihe von Magnetventilen aufweisen kann. Mit Hilfe des steuerbaren Ventilblocks 40 können die Umströmvorgänge der Druckluft zwischen den Tragbälgen 26 und einer Druckluftversorgung 42 bzw. einem Luftvorrat variabel gesteuert werden. Die Leitungen zur Druckluftversorgung zwischen den Tragbälgen 26, dem Ventilblock 40 und der Druckluftversorgung 42 sind in durchgezogenen Linien ausgeführt.

Figur 3 zeigt weiterhin ein ECAS-Steuergerät 37, das zur Ansteuerung der Tragelemente 27 an der Hinterachse des Fahrzeugs über die Steuereinheit 35 dient. Das Anheben bzw. Absenken des Chassis kann mittels einer Druckbeaufschlagung bzw. -regulierung der Tragelemente 27 aus einem weiteren Druckluftvorrat 43 erfolgen. Das ECAS-Steuergerät 37 ist vorzugsweise über eine CAN-Bus-Verbindung 39 mit der zentralen Steuerschaltung 36 gekoppelt. Diese Verbindung ist jedoch nicht zwingend notwendig, da auch eine separate Ansteuerung der Tragbälge 26 und der Tragelemente 27 möglich ist. Ggf. kann auch das ECAS-Steuergerät 37 mittels der Eingabeeinrichtung 38 manuell angesteuert werden.

Dämpferelemente 25-L und 25-R sind jeweils den linken und rechten Tragbälgen 26-L bzw. 26-R zugeordnet. Diese Dämpferelemente 25-L, 25-R werden nach erfolgter Niveauregulierung der Kabine mittels geeigneter Steuersignale der zentralen Steuerschaltung 36 auf ihre härteste Dämpfungsstufe gestellt, so dass weitere Aufbaubewegungen der Kabine weitgehend unterdrückt werden können.

Bei Nutzfahrzeugen mit Blatt- oder Schraubenfederung an der Vorderachse und mit Luftfedem (ECAS-System) an der Hinterachse erfolgt die Höhenverstellung derart, dass das Chassis um die Querachse mittels der Hinterachsaufhängung in etwa horizontal ausgerichtet wird. Die horizontale Ausrichtung der Kabine erfolgt dann über die Tragelemente 26-L und 26-R. Bei Nutzfahrzeugen mit Luftfederung an allen Achsen kann das Chassis über das ECAS-System an der Vorder- und/oder Hinterachse angehoben bzw. abgesenkt werden.

Wenn bei den Erläuterungen der Figur 3 von rechten und linken Tragbälgen 26-L und 26-R sowie von rechten und linken Dämpfern 25-L und 25-R die Rede ist, so sind damit normalerweise vordere und hintere Elemente jeweils einer Seite (links oder rechts) gemeint, die in ihrer Ansteuerung jeweils miteinander gekoppelt sind.

In einer einfachen und kostengünstigen Variante kann der Fahrer die Ausrichtung der Fahrerkabine 20 manuell steuern, ohne dass irgendwelche weiteren Sensoren vorhanden sind. Ggf. kann ein optionaler Neigungssensor 44 eine automatische Ausrichtung ermöglichen, wenn der Fahrer hierzu mittels der Eingabeeinrichtung 38 einen entsprechenden Steuerbefehl gibt. Die Einbeziehung der Chassis-Höhenregulierung erfolgt vorzugsweise über entsprechende Steuerbefehle (bzw. CAN-Bus-Signale 39) von der zentralen Steuerschaltung 36 an das ECAS-Steuergerät 37.

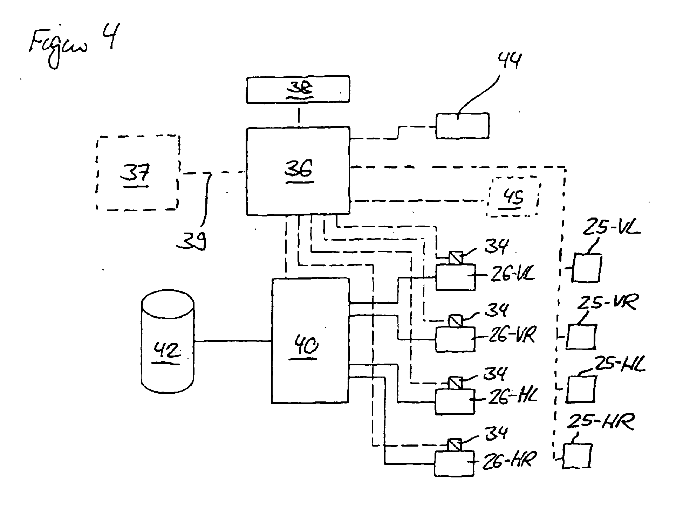

Eine zweite Variante der erfindungsgemäßen Aufhängungssteuerung ist anhand der Figur 4 verdeutlicht. Bei dieser Variante wird die Fahrerkabine 20 über alle vier Tragbälge 26 in ihrer Lage ausgerichtet. Es werden neben den beiden vorderen Tragbälgen 26-VL und 26-VR auch die beiden hinteren Tragbälge 26-HL und 26-HR von der zentralen Steuerschaltung 36 angesteuert. Aufgrund des komplexeren Zusammenwirkens der vier Tragbälge 26 kann die Lageausrichtung der Fahrerkabine 20 bei dieser Variante vorzugsweise mittels einer Auswertung der Signale des Neigungssensors 44 gesteuert werden. Alternativ hierzu kann die Steuerung auch manuell erfolgen. Zur Verbesserung der Wankstabilisierung kann das Fahrwerk mittels des ECAS-Systems auf den Achsanschlag abgesenkt werden. Dies kann ebenfalls über CAN-Bus-Signale 39 von der zentralen Steuerschaltung 36 an das ECAS-Steuergerät 37 erfolgen. Da die Einbeziehung des ECAS-Steuergeräts 37 sowie des CAN-Bus optional ist, sind diese Komponenten mit unterbrochener Linierung dargestellt.

Auch bei der Variante gemäß Figur 4 ist eine Verstellung von Dämpferelementen 25-VL, 25-VR, 25-HL, 25-HR auf ihre härteste Stufe nach der erfolgten Niveauregulierung mittels der Tragbälge 26 vorgesehen. Die Dämpferelemente 25 werden hierbei normalerweise gemeinsam mittels der zentralen Steuerschaltung 36 angesteuert. Hierzu kann eine gemeinsame Steuerleitung ausreichen, da eine separate Dämpferansteuerung während des Schlafmodus nicht sinnvoll ist. Wie zuvor erwähnt, ist das rechte vordere Dämpferelement 25-VR dem rechten vorderen Tragbalg 26-VR zugeordnet, das linke vordere Dämpferelement 25-VL dem linken vorderen Tragbalg 26-VL, etc, wobei die Tragbälge 26 jeweils in integrierter Bauausführung mit den Dämpfern 25 ausgebildet sein können.

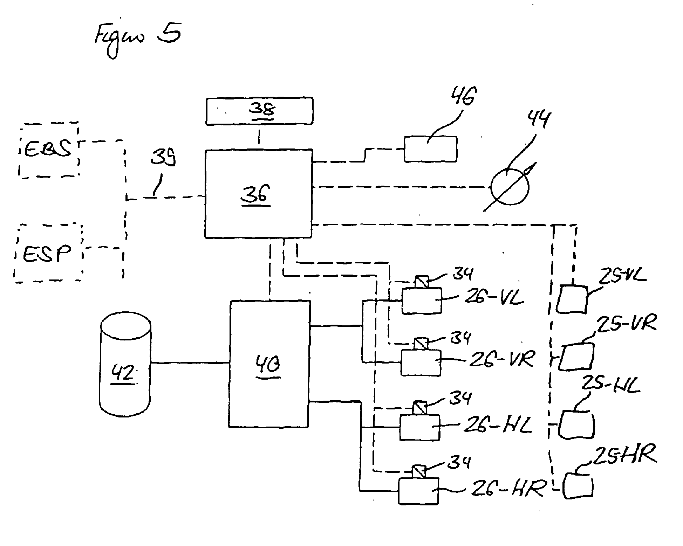

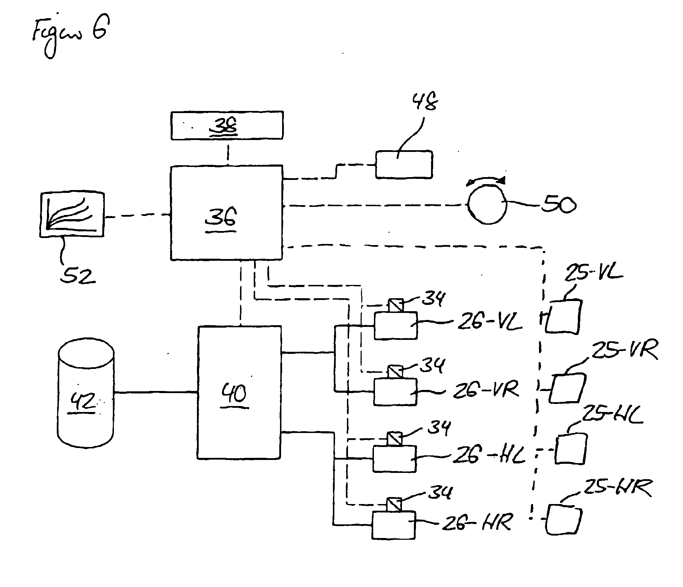

Ein mit unterbrochener Linierung angedeuteter zusätzlicher Sensor 45 ist optional und kann die Aufhängungssteuerung ggf. in die Lage versetzen, bei fahrendem Fahrzeug für eine Dämpfungsansteuerung zu sorgen. Diese Varianten werden anhand der folgenden Figuren 5 und 6 näher erläutert.

Der übrige Aufbau der Steuerung entspricht der bereits beschriebenen ersten Variante entsprechend Figur 3.

Bei den ersten beiden Varianten entsprechend der Figuren 3 und 4 ist vorgesehen sein, dass die Trag- bzw. Federbälge 26 und/oder die Tragbälge 32 der Hinterachse 18 nach dem Erreichen der gewünschten horizontalen Lage der Fahrerkabine 20 in ihre stärkste Dämpferstufe gebracht werden. Auf diese Weise kann verhindert werden, dass die Fahrerkabine bei äußeren Einflüssen durch Wind oder Erschütterungen oder bei Bewegungen eines Passagiers ins Schwanken geraten kann. Alternativ oder zusätzlich können zuschaltbare mechanische Verriegelungen der Fahrerkabine 20 vorgesehen sein.

Anhand der Figur 5 wird eine dritte Variante der Aufhängungssteuerung verdeutlicht, die im Unterschied zu den beiden ersten Varianten auch für eine Neigungskompensation der Fahrerkabine während der Fahrt des Fahrzeugs geeignet ist. Soll die erfindungsgemäße Aufhängungssteuerung gemäß Figur 5 auch zum Nick- oder Wankausgleich während der Fahrt des Nutzfahrzeuges genutzt werden, so kann es sinnvoll sein, zusätzlich die Signale eines Beschleunigungssensors 46 auszuwerten und in Abhängigkeit von den hierbei gelieferten Signalen eine unterschiedliche Ansteuerung der Dämpfungselemente 25 der Tragelemente vorzunehmen. Wenn im vorliegenden Zusammenhang der Einfachheit halber lediglich von einem Beschleunigungssensor 46 die Rede ist, so ist damit auch eine Sensorausstattung gemeint, die mehrere Beschleunigungssensoren, einen Gierratensensor und/oder einen Neigungssensor umfasst. Diese Sensoren können ggf. bereits Teil einer vorhandenen Fahrzeugausstattung sein, bspw. einer Fahrdynamikregelung. Die Sensorsignale können ggf. als Bussignale für eine zusätzliche Auswertung in der zentralen Steuerschaltung 36 zur Verfügung gestellt werden. So können über den CAN-Bus 39 wahlweise Geschwindigkeitssignale eines elektronischen Bremssystems (EBS) und/oder eines elektronischen Fahrstabilitätssystems (ESP) ausgewertet werden.

Der übrige Aufbau entspricht wiederum den zuvor beschriebenen Varianten. Selbstverständlich können alle erwähnten Varianten miteinander kombiniert werden, da die Höhenregulierung der Fahrerkabine 20 des stehenden Fahrzeugs und die Schwingungstilgung bei sich bewegendem Fahrzeug gleichermaßen über eine unterschiedliche Ansteuerung der Dämpfungselemente 25 der Tragelemente erfolgt.

Gegebenenfalls kann auf den Beschleunigungssensor 46 jedoch auch verzichtet werden, wodurch eine einfachere Steuerung realisiert werden kann. Diese vierte Variante der Aufhängungssteuerung wird anhand der Figur 6 illustriert. Hierbei kann es beispielsweise ausreichen, die Signale eines Geschwindigkeitssensors 48 und/oder eines Lenkwinkelsensors 50 auszuwerten, um Fahrzustandsänderungen zu erfassen, welche beispielsweise auf ein stärkeres Verzögern des Nutzfahrzeuges oder ein Beschleunigen hinweisen. Eine solche Steuerung kann mit wesentlich geringerem Rechenaufwand durchgeführt werden, wobei die hierbei erzielte Genauigkeit gegenüber einer aufwändigeren Regelung mittels Bescheunigungssensor 46 jedoch reduziert ist.

Die vom Geschwindigkeitssensor 48 gelieferten Signale können vorzugsweise über eine Zuordnungsvorschrift eines Kennfeldes 52 einer bestimmten Aufbaubewegung der Fahrerkabine 20 zugeordnet werden. Wenn die Fahrzeugbeschleunigung einen definierten Wert annimmt, so kann daraus auf eine definierte Nickschwingung der Kabine geschlossen werden. Gleiches gilt für unterschiedliche Fahrzeugverzögerungen. Das Kennfeld 52 sorgt für eine näherungsweise richtige Ansteuerung der Tragbälge, um diese Nickschwingungen zu unterdrücken.

In gleicher Weise können die vom Lenkwinkelsensor 50 gelieferten Signale über eine weitere Zuordnungsvorschrift des Kennfeldes 52 einer bestimmten Aufbaubewegung der Fahrerkabine 20 zugeordnet werden. Wenn die Querbeschleunigung einen definierten Wert annimmt, so kann daraus auf eine definierte Wankschwingung der Kabine geschlossen werden. Da diese Aufbaubewegungen nicht nur vom aktuellen Lenkwinkel, sondern auch von der aktuellen Fahrgeschwindigkeit abhängen, müssen die Signale des Geschwindigkeitssensors 48 zusätzlich ausgewertet werden. Das Kennfeld 52 sorgt für eine näherungsweise richtige Ansteuerung der Tragbälge, um die Wankschwingungen zu unterdrücken.

Für unterschiedliche Fahrzeuge sind jeweils unterschiedliche Kennfelder 52 notwendig, da die Fahrzeug- und Kabinenmassen sowie die jeweilige Kinematik starken Einfluss auf die geschwindigkeits- und lenkwinkelabhängigen Aufbaureaktionen haben.

Der Vorteil der anhand der Figur 6 beschriebenen vierten Variante der erfindungsgemäßen Aufbausteuerung liegt insbesondere in deren einfachem Aufbau. Die Ansteuerung der Dämpfer der Tragelemente 22 erfolgt hierbei mit einer relativ einfachen Steuerung, so dass keine aufwändige und rechenintensive Regelung notwendig ist. Besonders vorteilhaft lassen sich die Sensorsignale der beiden Sensoren 48 und 50 aus bereits vorhandenen Komponenten einer Fahrdynamikregelung (ESP) und/oder einer Blockierverhinderungseinrichtung (ABS) einer elektronisch geregelten Bremsanlage (EBS) gewinnen (vgl. Figur 5). Diese Signale stehen normalerweise als CAN-Bus-Signale zur Verfügung.

Gegebenenfalls kann das Ausgangssignal des Geschwindigkeitssensors 48 auch von einem Geber für eine Fahrgeschwindigkeitsanzeige und/oder für einen Fahrtenschreiber geliefert werden.

## Patentansprüche

1. Aufhängung für eine Fahrerkabine (20) eines Nutzfahrzeugs (10), mit wenigstens drei fluidisch wirkenden Tragelementen (22), die zwischen der Fahrerkabine (20) und einem Fahrgestellrahmen (12) angeordnet und die mittels einer Steuerschaltung jeweils separat in ihrem Hub bzw. in ihrer Feder- und/oder Dämpfungscharakteristik einstellbar sind,
**dadurch gekennzeichnet,**
**dass** die Fahrerkabine (20) einen Ruheraum für Ruhe- oder Übemachtungspausen wenigstens eines Fahrers umfasst und eine annähernd horizontale Ausrichtung der Fahrerkabine (20) im Stillstand des Nutzfahrzeugs (10) durch eine Einstellung des jeweiligen Hubs wenigstens eines der wenigstens drei Tragelemente (22) und von Aufhängungselementen eines Fahrwerks des Nutzfahrzeugs (10) realisiert ist, und eine Steuerung
- zur Lagejustierung der Fahrerkabine (20) um eine Fahrzeuglängsachse mittels einer Verstellung der Tragelemente (22),
- zur Lagejustierung der Fahrerkabine (20) um eine Fahrzeugquerachse mittels einer Verstellung der Aufhängungselemente des Fahrwerks, und
- zur Einstellung der Tragelemente (22) nach erfolgter Lagejustierung in ihrer Feder- und/oder Dämpfungscharakteristik dahingehend, dass eine Bewegung der Fahrerkabine (20) weitgehend oder vollständig unterdrückt wird
vorgesehen ist.

2. Aufhängung nach Anspruch 1, **dadurch gekennzeichnet, dass** die Einstellung der Feder- und/oder Dämpfungscharakteristik eine Dämpferhartstellung vorsieht, bei der eine maximale Dämpferverhärtung angestrebt wird.

3. Aufhängung nach Anspruch 1 oder 2, **dadurch gekennzeichnet, dass** eine annähernd horizontale Lage der Fahrerkabine (20) mittels einer Hubverstellung wenigstens eines linken und eines rechten Tragelements (22) und mittels einer Höhenjustierung einer Hinterachsaufhängung des Nutzfahrzeugs (10) einstellbar ist.

4. Aufhängung nach Anspruch 1, 2 oder 3, **dadurch gekennzeichnet, dass** eine annähernd horizontale Lage der Fahrerkabine (20) mittels einer Hubverstellung wenigstens eines linken und eines rechten Tragelements (22) und mittels einer Höhenjustierung einer Vorderachsaufhängung des Nutzfahrzeugs (10) einstellbar ist.

5. Aufhängung nach einem der vorstehenden Ansprüche, **dadurch gekennzeichnet, dass** die Tragelemente und/oder Aufhängungselemente mittels einer manuellen Steuerung in ihrem Hub einstellbar sind.

6. Aufhängung nach einem der Ansprüche 1 bis 4, **dadurch gekennzeichnet, dass** die Tragelemente und/oder Aufhängungselemente mittels einer automatischen Steuerung in ihrem Hub einstellbar sind.

7. Aufhängung nach Anspruch 5, **dadurch gekennzeichnet, dass** die Tragelemente (22) und/oder Aufhängungselemente in ihrem Hub mittels einer Auswertung der Signale eines Lage- bzw. Neigungssensors (44) einstellbar sind.

8. Aufhängung nach einem der vorstehenden Ansprüche, **dadurch gekennzeichnet, dass** die Fahrerkabine (20) nach erfolgter Lagejustierung gegen einen mechanischen Anschlag verriegelbar ist.

9. Aufhängung nach einem der vorstehenden Ansprüche, **dadurch gekennzeichnet, dass** die Aufhängungselemente des Fahrwerks nach erfolgter Lagejustierung gegen einen mechanischen Anschlag verriegelbar sind.

10. Aufhängung nach einem der vorstehenden Ansprüche, **dadurch gekennzeichnet, dass** mittels der automatischen Lagesteuerung Schwenk- und/oder Taumelbewegungen der Fahrerkabine (20) ausregelbar sind.

11. Aufhängung nach einem der vorhergehenden Ansprüche, **dadurch gekennzeichnet, dass** die Tragelemente (22) und/oder die Aufhängungselemente jeweils mit ihnen zugeordneten und/oder mit integrierten Weg- und/oder Lagesensoren versehen sind.

12. Verfahren zur Ansteuerung einer Aufhängung für eine Fahrerkabine (20) eines Nutzfahrzeugs (10), die wenigstens drei fluidisch wirkende Tragelemente (22) umfasst, die zwischen der Fahrerkabine (20) und einem Fahrgestellrahmen (12) angeordnet und die jeweils separat in ihrem Hub bzw. in ihrer Feder- und/oder Dämpfungscharakteristik einstellbar sind,
**dadurch gekennzeichnet,**
**dass** die Fahrerkabine (20) einen Ruheraum für Ruhe- oder Übemachtungspausen wenigstens eines Fahrers umfasst und die Fahrerkabine (20) im Stillstand des Nutzfahrzeugs (10) mittels einer Einstellung des jeweiligen Hubs wenigstens eines der wenigstens drei Tragelemente (22) und von Aufhängungselementen eines Fahrwerks des Nutzfahrzeugs (10) annähernd horizontal ausrichtbar ist, wobei eine Lagejustierung der Fahrerkabine (20) um eine Fahrzeuglängsachse mittels einer Verstellung der Tragelemente (22) und eine Lagejustierung der Fahrerkabine (20) um eine Fahrzeugquerachse mittels einer Verstellung der Aufhängungselemente des Fahrwerks realisiert wird, und dass eine Bewegung der Fahrerkabine (20) nach erfolgter Lagejustierung mittels einer Variation der Dämpfungscharakteristik der Tragelemente (22) unterdrückt wird.

13. Verfahren nach Anspruch 12, **dadurch gekennzeichnet, dass** die Variation der Feder- und/oder Dämpfungscharakteristik eine Dämpferhartstellung vorsieht, bei der eine maximale Dämpferverhärtung angestrebt wird.

14. Verfahren nach Anspruch 12 oder 13, **dadurch gekennzeichnet, dass** eine annähernd horizontale Lage der Fahrerkabine (20) mittels einer Hubverstellung wenigstens eines linken und eines rechten Tragelements (22) und mittels einer Höhenjustierung einer Hinterachsaufhängung des Nutzfahrzeugs (10) eingestellt wird.

15. Verfahren nach Anspruch 12, 13 oder 14, **dadurch gekennzeichnet, dass** eine annähernd horizontale Lage der Fahrerkabine (20) mittels einer Hubverstellung wenigstens eines linken und eines rechten Tragelements (22) und mittels einer Höhenjustierung einer Vorderachsaufhängung des Nutzfahrzeugs (10) einstellbar ist.

16. Verfahren nach einem der Ansprüche 12 bis 15, **dadurch gekennzeichnet, dass** die Tragelemente (22) und/oder Aufhängungselemente mittels einer manuellen Steuerung in ihrem Hub einstellbar sind.

17. Verfahren nach einem der Ansprüche 12 bis 16, **dadurch gekennzeichnet, dass** die Tragelemente (22) und/oder Aufhängungselemente mittels einer automatischen Steuerung in ihrem Hub einstellbar sind.

18. Verfahren nach Anspruch 17, **dadurch gekennzeichnet, dass** zur Hubverstellung der Tragelemente (22) und/oder Aufhängungselemente die Signale eines Lagesensors ausgewertet werden.

19. Verfahren nach einem der Ansprüche 12 bis 18, **dadurch gekennzeichnet, dass** Schwenk- und/oder Taumelbewegungen der Fahrerkabine (20) mittels einer automatischen Lagesteuerung ausgeregelt werden.

## Claims

1. Suspension for a driver cab (20) of a utility vehicle (10) with at least three fluidically effective load-bearing elements (22) that are arranged between the driver cab (20) and a chassis (12) and which load-bearing elements can each be adjusted separately with regard to their lift and/or their suspension and/or shock-absorption characteristics by means of a control circuit, **characterised in that** the driver cab (20) contains a rest area for rest or overnight breaks for at least one driver and that a virtually horizontal alignment of the driver cab (20) when the utility vehicle (10) is at a standstill is ensured by an adjustment of the respective lift of a total of at least one of at least three load-bearing elements (22) and of suspension elements of a running gear of the utility vehicle (10), and that a control mechanism is provided
- To adjust the position of the driver cab (20) along a longitudinal axis of the vehicle by means of an adjustment of the load-bearing elements (22),
- To adjust the position of the driver cab (20) along a transverse axis of the vehicle by means of an adjustment of the suspension elements of the running gear, and
- To adjust the load-bearing elements (22) following a successful position adjustment with regard to their suspension and/or shock-absorption characteristics in order to ensure that any movement of the driver cab (20) is suppressed to a large extent or completely.

2. Suspension in accordance with claim 1, **characterised in that** the adjustment of the suspension and/or shock-absorption characteristics provides for a hard setting for the shock absorbers, designed to provide maximum rigidification of the shock absorbers.

3. Suspension in accordance with claim 1 or 2, **characterised in that** a virtually horizontal position of the driver cab (20) can be set by means of an adjustment of the lift of at least one left-hand and one right-hand load-bearing element (22) and by means of a height adjustment of a rear-axle suspension of the utility vehicle (10).

4. Suspension in accordance with claim 1, 2 or 3, **characterised in that** a virtually horizontal position of the driver cab (20) can be set by means of an adjustment of the lift of at least one left-hand and one right-hand load-bearing element (22) and by means of a height adjustment of a front-axle suspension of the utility vehicle (10).

5. Suspension in accordance with one of the claims described above, **characterised in that** the load-bearing elements and/or suspension elements can be adjusted with regard to their lift by means of a manual control mechanism.

6. Suspension in accordance with one of the claims 1 to 4, **characterised in that** the load-bearing elements and/or suspension elements can be adjusted with regard to their lift by means of an automatic control mechanism.

7. Suspension in accordance with claim 5, **characterised in that** the load-bearing elements (22) and/or suspension elements can be adjusted with regard to their lift by means of an evaluation of the signals from a position and/or tilt sensor (44).

8. Suspension in accordance with one of the claims described above, **characterised in that** the driver cab (20) can be locked against a mechanical stop following completion of position adjustment.

9. Suspension in accordance with one of the claims described above, **characterised in that** the suspension elements of the running gear can be locked against a mechanical stop following completion of position adjustment.

10. Suspension in accordance with one of the claims described above, **characterised in that** any pivoting and/or wobbling movements of the driver cab (20) can be compensated for by means of the automatic position control.

11. Suspension in accordance with one of the claims described above, **characterised in that** the load-bearing elements (22) and/or the suspension elements are provided in each case with travel and/or position sensors that are assigned to them and/or integrated in them.

12. Procedure for activating a suspension for a driver cab (20) of a utility vehicle (10), which suspension comprises at least three fluidically effective load-bearing elements (22) that are arranged between the driver cab (20) and a chassis (12) and that can each be adjusted separately with regard to their lift and/or their suspension and/or shock-absorption characteristics, **characterised in that** the driver cab (20) contains a rest area for rest or overnight breaks for at least one driver and that the driver cab (20) can be aligned to a virtually horizontal position when the utility vehicle (10) is at a standstill by means of an adjustment of the respective lift of at least one of the total of at least three load-bearing elements (22) and of suspension elements of a running gear of the utility vehicle (10), whereby a position adjustment of the driver cab (20) is implemented along a longitudinal axis of the vehicle by means of an adjustment of the load-bearing elements (22) and a position adjustment of the driver cab (20) is implemented along a transverse axis of the vehicle by means of an adjustment of the suspension elements of the running gear, and that any movement of the driver cab (20) following completion of position adjustment is suppressed by means of a variation of the shock-absorption characteristics of the load-bearing elements (22).

13. Procedure in accordance with claim 12, **characterised in that** the variation of the suspension and/or shock-absorption characteristics includes a hard setting for the shock absorbers, designed to provide the maximum rigidification of the shock absorbers.

14. Procedure in accordance with claim 12 or 13, **characterised in that** a virtually horizontal position of the driver cab (20) can be set by means of an adjustment of the lift of at least one left-hand and one right-hand load-bearing element (22) and by means of a height adjustment of a rear-axle suspension of the utility vehicle (10).

15. Procedure in accordance with claim 12, 13 or 14, **characterised in that** a virtually horizontal position of the driver cab (20) can be set by means of an adjustment of the lift of at least one left-hand and one right-hand load-bearing element (22) and by means of a height adjustment of a front-axle suspension of the utility vehicle (10).

16. Procedure in accordance with one of the claims 12 to 15, **characterised in that** the load-bearing elements (22) and/or suspension elements can be adjusted with regard to their lift by means of a manual control mechanism.

17. Procedure in accordance with one of the claims 12 to 16, **characterised in that** the load-bearing elements (22) and/or suspension elements can be adjusted with regard to their lift by means of an automatic control mechanism.

18. Procedure in accordance with claim 17, **characterised in that** the signals of a position sensor are evaluated in order to adjust the lift of the load-bearing elements (22) and/or suspension elements.

19. Procedure in accordance with one of the claims 12 to 18, **characterised in that** any pivoting and/or wobbling movements of the driver cab (20) are compensated by means of an automatic position control.

## Revendications

1. Suspension pour une cabine (20) d'un véhicule industriel (10), avec au moins trois éléments porteurs (22) agissant de manière fluide, qui sont disposés entre la cabine (20) et un cadre de châssis (12), et sont réglables chacun séparément au niveau de leur course ou de leur courbe caractéristique de suspension et/ou d'amortissement au moyen d'un système de commande, **caractérisée en ce que** la cabine (20) comporte un espace de repos pour passer les pauses ou les nuits d'au moins un chauffeur et un alignement pratiquement horizontal de la cabine (20) à l'arrêt du véhicule industriel (10) est obtenu par un réglage de la course d'au moins un d'au moins trois éléments porteurs (22) et d'éléments de suspension d'un train de roulement du véhicule industriel (10), et **en ce qu'**une commande est prévue
- pour l'ajustage de la position de la cabine (20) autour d'un axe longitudinal du véhicule au moyen d'un réglage des éléments porteurs (22)
- pour l'ajustage de la position de la cabine (20) autour d'un axe transversal du véhicule au moyen d'un réglage des éléments de suspension du train de roulement, et
- pour le réglage des éléments porteurs (22) après réalisation de l'ajustage de la position au niveau de leur courbe caractéristique de suspension et/ou d'amortissement en partant du principe qu'un mouvement de la cabine (20) est supprimé en grande partie ou complètement.

2. Suspension selon la revendication 1, **caractérisée en ce que** le réglage de la courbe caractéristique de suspension et/ou d'amortissement prévoit une position dure des amortisseurs destinée à durcir les amortisseurs au maximum.

3. Suspension selon la revendication 1 ou 2, **caractérisée en ce qu'**une position pratiquement horizontale de la cabine (20) est réglable au moyen d'un réglage de la course d'au moins un élément porteur gauche et un élément porteur droit (22), et au moyen d'un ajustage de la hauteur d'une suspension du pont arrière du véhicule industriel (10).

4. Suspension selon la revendication 1, 2 ou 3, **caractérisée en ce qu'**une position pratiquement horizontale de la cabine (20) est réglable au moyen d'un réglage de la course d'au moins un élément porteur gauche et un élément porteur droit (22), et au moyen d'un ajustage de la hauteur d'une suspension de l'essieu avant du véhicule industriel (10).

5. Suspension selon l'une des revendications mentionnées précédemment, **caractérisée en ce que** les éléments porteurs et/ou les éléments de suspension sont réglables au niveau de leur course au moyen d'une commande manuelle.

6. Suspension selon l'une des revendications 1 à 4, **caractérisée en ce que** les éléments porteurs et/ou les éléments de suspension sont réglables au niveau de leur course au moyen d'une commande automatique.

7. Suspension selon la revendication 5, **caractérisée en ce que** les éléments porteurs (22) et/ou les éléments de suspension sont réglables au niveau de leur course au moyen d'une analyse des signaux émis par un capteur de position et d'inclinaison (44).

8. Suspension selon l'une des revendications mentionnées précédemment, **caractérisée en ce que** la cabine (20) est verrouillable contre une butée mécanique après réalisation d'un ajustage de la position.

9. Suspension selon l'une des revendications mentionnées précédemment, **caractérisée en ce que** les éléments de suspension du train de roulement sont verrouillables contre une butée mécanique après réalisation d'un ajustage de la position.

10. Suspension selon l'une des revendications mentionnées précédemment, **caractérisée en ce que** des mouvements de pivotement et/ou d'oscillation de la cabine (20) sont régulables au moyen de la commande automatique de la position.

11. Suspension selon l'une des revendications mentionnées précédemment, **caractérisée en ce que** les éléments porteurs (22) et/ou les éléments de suspension sont pourvus à chaque fois de capteurs de course et/ou de position qui leur sont affectés et/ou de capteurs de course et/ou de position intégrés.

12. Procédé pour piloter une suspension d'une cabine (20) d'un véhicule industriel (10), comprenant au moins trois éléments porteurs (22) agissant de manière fluide, qui sont disposés entre la cabine (20) et le cadre de châssis (12) et sont réglables chacun séparément au niveau de leur course et de leur courbe caractéristique de suspension et/ou d'amortissement, **caractérisé en ce que** la cabine (20) comporte un espace de repos pour passer les pauses ou les nuits d'au moins un chauffeur et la cabine (20) peut être ajustée de manière pratiquement horizontale à l'arrêt du véhicule industriel (10) au moyen d'un réglage de chaque course d'au moins un d'au moins trois éléments porteurs (22) et d'éléments de suspension d'un train de roulement du véhicule industriel (10), auquel cas un ajustage de la position de la cabine (20) autour d'un axe longitudinal du véhicule est obtenu au moyen d'un réglage des éléments porteurs (22) et un ajustage de la position de la cabine (20) autour d'un axe transversal du véhicule est obtenu au moyen d'un réglage des éléments de suspension du train de roulement, et **en ce qu'**un mouvement de la cabine (20) est supprimé, après ajustage de la position, au moyen d'une variation de la courbe caractéristique d'amortissement des éléments porteurs (22).

13. Procédé selon la revendication 12, **caractérisé en ce que** la variation de la courbe caractéristique de suspension et/ou d'amortissement prévoit une position dure des amortisseurs destinée à durcir les amortisseurs au maximum.

14. Procédé selon la revendication 12 ou 13, **caractérisé en ce qu'**une position pratiquement horizontale de la cabine (20) est réglable au moyen d'un réglage de la course d'au moins un élément porteur gauche et un élément porteur droit (22), et au moyen d'un ajustage de la hauteur d'une suspension du pont arrière du véhicule industriel (10).

15. Procédé selon la revendication 12, 13 ou 14, **caractérisé en ce qu'**une position pratiquement horizontale de la cabine (20) est réglable au moyen d'un réglage de la course d'au moins un élément porteur gauche et un élément porteur droit (22), et au moyen d'un ajustage de la hauteur d'une suspension de l'essieu avant du véhicule industriel (10).

16. Procédé selon l'une des revendications 12 à 15, **caractérisé en ce que** les éléments porteurs (22) et/ou les éléments de suspension sont réglables au niveau de leur course au moyen d'une commande manuelle.

17. Procédé selon l'une des revendications 12 à 16, **caractérisé en ce que** les éléments porteurs (22) et/ou les éléments de suspension sont réglables au niveau de leur course au moyen d'une commande automatique.

18. Procédé selon la revendication 17, **caractérisé en ce que** les signaux d'un capteur de position sont analysés pour régler la course des éléments porteurs (22) et/ou des éléments de suspension.

19. Procédé selon l'une des revendications 12 à 18, **caractérisé en ce que** les mouvements de pivotement et/ou d'oscillation de la cabine (20) sont régulés au moyen d'une commande automatique de la position.
